# EUROPEAN PATENT SPECIFICATION

(11) **EP 3 237 814 B1**
(45) Date of publication and mention of the grant of the patent: **06.10.2021**
(21) Application number: 15873737.9
(22) Date of filing: 15.12.2015
(51) Int. Cl.: F24F 12/00, F25B 49/02, F25B 31/00

(54) **DEVICE AND METHOD FOR HEATING OF AIR AT AN AIR TREATMENT DEVICE**
VORRICHTUNG UND VERFAHREN ZUM ERWÄRMEN VON LUFT AN EINER LUFTBEHANDLUNGSVORRICHTUNG
DISPOSITIF ET PROCÉDÉ POUR CHAUFFER DE L'AIR AU NIVEAU D'UN DISPOSITIF DE TRAITEMENT D'AIR

(30) Priority: 23.12.2014 SE 1451659
(43) Date of publication of application: 01.11.2017
(73) Proprietor: FläktGroup Sweden AB, 551 84 Jönköping (SE)
(72) Inventor: SCHILDT, Johan, 561 39 Huskvarna (SE)
(74) Representative: Curo AS
(86) International application number: PCT/SE2015/051346
(87) International publication number: WO 2016/105262

(56) References cited:
- EP-A1- 2 672 201
- EP-A1- 2 792 973
- EP-A2- 1 647 783
- WO-A1-2014/098724
- WO-A1-2014/141373
- CA-A1- 2 522 908
- JP-A- H03 129 255
- US-A1- 2009 090 117
- US-A1- 2013 333 862
- JONG WON CHOI ET AL.: 'Capacity control of a heat pump system applying a fuzzy control method' APPLIED THERMAL ENGINEERING, 20110323, PERGAMON vol. 31, no. 14, 23 March 2011, OXFORD GB, pages 2332 - 2339, XP028246783 DOI: 10.1016/J.APPLTHERMALENG.2011.03.032
- None

## Description

### Technical field

Present invention relates to a device and a method for heating of air at an air treatment device comprising an air handling unit, provided with a heat exchanger, and in combination with a heat pump for further heating of supply air in addition to what the heat exchanger provides. The heat pump is arranged with an extra injection circuit for gas/fluid injection directly in connection to the suction side of the compressor, which provides an extra cooling of the compressor and thereby a possibility to balance the discharge super heat in the system.

### Background of the invention

Within the field of air handling it is well known to decrease costs for heating, by recovery of heat energy from the exhaust air and transfer this energy to the supply air in an air handling unit. In normal cases, at least for Nordic countries and countries with cold climate, the installation also must be complemented with an additional heater, to be able of keeping sufficiently high temperature of the supply air, for example by an electric heating coil or liquid coupled heating coil, arranged in the supply air. It is further known to combine the air handling unit with a heat pump to recover even more energy from the extract air, i.e. to arrange an evaporator in the extract air, after the heat exchanger, and as well a condenser in the supply air. By the heat pump technique more energy is collected from the extract air by evaporation of refrigerant, and this energy is delivered to the supply air by condensation of the refrigerant in the condenser. At a heat pump the relation between added input driving energy and recovered energy is described as the COP-value. Normally this value is between COP 2-5, i.e. the recovered energy is 2-5 times bigger than the added electric energy for the operation of the heat pump. A known problem with heat pumps is that when the temperature of the air passing through the evaporator becomes too low, the operation is inefficient and there is a high wear in the heat pump compressor at these low temperatures. Usually, For Nordic climate, it is recommended switching off the heat pump at a temperature around - 15°C. When the heat pump cannot be used, the entire heat pump's contribution to the heat of the supply air must be replaced with additional heating, whereby an auxiliary heater then usually is arranged, as described above, in the supply air after the heat exchanger. The applicant has a solution to this problem, by an international application - WO2014098724 disclosing a device according to the preamble of claim 1, whereby, instead of placing an auxiliary heater in the supply air to manage the heating demand when the heat pump is switched off, has complemented the facility with an auxiliary electric heater in the extract air, before the evaporator, to thereby heat in this position and extend the operation time of the heat pump. By this is supplied just enough heat to maintain the operation of the heat pump, so as not to lose the entire heat pump contribution for the heating of supply air. One problem is that one in different ways has to add external energy by at least one additional heating coil, which provides extra costs for installation and operation, and also the air handling physical dimensions may be affected.

### Disclosure of the invention

With the present invention the object to solve the above mentioned problems is achieved in an alternative way, compared to WO2014098724, from the first aspect, by an air treatment device according to claim 1, where the refrigerant recirculation circuit of the heat pump comprises an extra circuit - an injection circuit comprising an injection valve, which is arranged to redirect at least a subset of the refrigerant from high pressure side to low pressure side, whereby the subset of the refrigerant doesn't pass through the expansion valve and the evaporator, for lowering of the - so called - Discharge Super Heat (DSH) in the system, by gas/liquid injection in connection to the suction side of the compressor. The DSH is defined as the difference between the condensing temperature and the hot gas temperature in the system, which is well known terminology in heat pump systems. If it will be gas or liquid injection varies depending on operating conditions and how much the injection valve opens. Initially and at a small opening of the injection valve it is typically gaseous refrigerant that arrives to the suction side, whereas gradually at a need for further reduction of the hot gas temperature, and thus a more open injection valve, the injection gradually tends to involve more liquid droplets. Through the device a lowering of the discharge super heat is possible, whereby the compressor also has a possibility to operate "outside" its normal operating range (also called envelop). The DSH normally increases when the compressor operates in the outskirts of its envelop, for example while the outdoor temperature is very low. By controlling/lowering the DSH it is possible to keep the heat pump operation and extract heat from the extract air and completely skip the auxiliary heater in the supply air as well in the extract air and manage the complete heating of the supply air by means of the heat exchanger and the heat pump equipped with the injector circuit. In connection to ordinary, so-called air-to-air heat pumps, this technique occurs - and is called "liquid injection" technique - where by different solutions and coupling alternatives makes sure to lower the DSH and thereby allow operation down to lower outdoor temperatures than possible by conventional heat pump technology. In EP 1647783 B1 is among other things presented a solution for an air-to-air heat pump and where the technology is presented in more detail. However, it is not yet known to combine a heat pump according this technology with an air handling unit with some form of heat exchanger and thus fully be able to abolish all kinds of extra heaters, which is very beneficial from a cost, installation and operational point of view, compared to existing solutions.

According to the invention the circulation circuit comprises a pressure sensor, which is arranged to measure the pressure on the high pressure side of the circulation circuit, preferably after the condenser. This makes it possible to theoretically determine a condensation temperature of the refrigerant.

According to the invention the circulation circuit comprises a temperature sensor, which is arranged to measure the so called hot gas temperature, which is the temperature of the refrigerant after the compressor. Preferably, the temperature sensor is arranged to measure the temperature on the so-called hot gas tube, which is arranged on the high pressure side after the compressor.

According to the invention the air treatment device comprises means for calculating the condensing temperature based of the measured pressure, measured with the pressure sensor according to the above. Furthermore, the device comprises means for calculating the so-called discharge super heat, which is the value that indicates the difference between the condensing temperature and the hot gas temperature. Preferably the calculations are handled through software provided in the control equipment which controls the device.

According to the invention the injection valve is arranged to control the amount of refrigerant flowing through the injection circuit based of the value of the discharge super heat, to control the discharge super heat. The discharge super heat normally increases when the compressor operation is getting close to the outskirts of its working range (envelop), i.e. when the outdoor temperature becomes very low, and the value thereby is a good indicator for the control of the injection valve. When the discharge super heat rises above a certain predetermined value, the injection valve is opened to lower the discharge super heat and thereby is - so to speak - the working area at the lower temperature areas. By this it is possible to run the compressor further, down to very low temperatures for this type of application, which means that the heat pump continuously can work and supply the extra heat needed to maintain the supply air temperature in the facility, without the need of extra heating coils or similar external heat sources in addition to the heat pump. The advantage is as mentioned above that the heat pump can be used for virtually most operation modes of the year, even in cold climates.

According to a preferred embodiment of the air treatment device the injection circuit opens at the suction pipe before the compressor, instead of directly into the suction chamber of the compressor. The advantage of this is that a conventional compressor without additional connections adapted for liquid injection can be used, even if the overall system is equipped with the optional cooling through the injection circuit. The injection circuit is thus not dependent on that the compressor is designed for this technology. In other words, it is then also possible to supplement the heat pump system with an injection circuit.

According to a alternative embodiment the injection circuit opens in a connection directly to the suction chamber of the compressor, which compressor then is adopted to be connected with an injection circuit.

According to the invention the heat pump circulation circuit comprises a heat exchanger, which is arranged with its first side between the second reservoir and the connection of the second end of the injection circuit to the suction side. The second side of the heat exchanger is a part of the injection circuit, i.e. the flow of the injection circuit flows through the second side of the heat exchanger, where the input to the heat exchanger connects to the expansion valve, i.e. to the liquid side, and the output from the second side of the heat exchanger connects to suction side of the compressor. The heat exchanger is in other words arranged to make the subset of incoming liquid refrigerant to shift to gaseous refrigerant, by the heat exchange with the refrigerant coming from the second reservoir. The advantage with this is that it is easier to control the discharge super heat than just use an injection valve, which in some applications (mostly small systems) may be a somewhat rough control means. The tube dimension of the injection circuit is normally relatively small and if the heat pump system also is small, the injection valve can in certain operation modes be dominant, i.e. a small change in the valve opening gives a great impact on the refrigerant flow, which can lead to that drops of liquid arrives to the compressor. Compressors may normally be permitted to obtain a certain amount of refrigerant in liquid form (drops) but the ideal is gaseous refrigerant, so it is a further advantage to be able to influence the injection of refrigerant to the suction side of the compressor.

According to a preferred embodiment the injection valve is of electrical type. If it in the actual case is enough with a simple control of the valve, it is enough with a simple type of valve, like an electrical valve, for example a solenoid valve or the like, arranged to control the flow through the injection circuit.

According to another preferred embodiment the injection valve is of thermal type. To avoid electronic control it is instead possible to use a thermal valve that opens for flow through the injection circuit within a certain tested temperature range. Preferably, a so-called bulb alternatively an external pressure compensation control for temperature measurement thus arranged after the compressor in the high pressure side. This solution is sufficient for the case a relatively blunt regulation is sufficient or wanted.

According to a further preferred embodiment, the injection valve is of the type step motor valve. For cases where a more precise or fine control are required, it is preferred to use a step motor valve with a large number of steps, for precise control of the refrigerant amount through the injector circuit.

From the second aspect of the invention the object is achieved to solve the above mentioned problems by a method for heating of air according to claim 7, which method comprises that the discharge super heat is lowered by at least a subset of refrigerant is injected in connection to the suction side of the compressor. This becomes possible by that the refrigerant recirculation circuit comprises an injection circuit connected with one end at a suction pipe between the condenser and the expansion valve, i.e. in a position on the high pressure side of the refrigerant and where the refrigerant is a fluid, and further connected with the other end at the suction side of the compressor, i.e. at the low pressure side. The injection circuit comprises an injection valve which, at need of lowering the discharge super heat, opens for at least a subset of the refrigerant from high pressure side to low pressure side, why the subset of refrigerant thereby not passes the expansion valve and the evaporator, but instead is delivered to the suction side of the compressor. Conversely, at decreased or cessation need to reduce the discharge super heat, the injection valve closes. Such a method for heating of air at an air handling unit of the type indicated in the preamble of claim 12 is not yet known and has the advantage compared to prior art, that no extra heater is needed for heating of supply air or maintained heat pump operation at the air handling unit, as earlier described in the background description of the patent application.

According to the second aspect of the invention a number of steps are performed to control the discharge super heat where a certain pressure on the high pressure side of the circulation circuit is measured with a pressure sensor, preferably in a position after the condenser. Based on the measured pressure the condensation temperature is calculated for the actual operation mode and further the hot gas temperature on the high pressure side of the compressor is measured. Based on the condensation temperature and the hot gas temperature the discharge super heat is calculated, which is the difference between the condensation temperature and the hot gas temperature for the actual operating condition. Based on the value of the discharge super heat, the injection valve opens when needed for a subset of refrigerant, which thereby flows through the injection circuit from high pressure side to low pressure side, such that the subset of the refrigerant thus not pass the expansion valve and the evaporator, but is transferred to suction side of the compressor, to control/reduce discharge super heat. The remaining refrigerant flows so to say, the usual way via the expansion valve and further to the evaporator.

According to the second aspect of the invention the subset of the refrigerant is led in the injection circuit through a heat exchanger to cause the liquid refrigerant, which arrive via the injection valve, to switch into gaseous refrigerant. The heat exchanger is connected with a first side to the low pressure side of the circulation circuit, in a position where the first side input of the heat exchanger is connected, after the other reservoir (in the heating case, the second reservoir is in the direction of flow after the evaporator), whereby the refrigerant flows from the second reservoir, and into heat exchanger, and an output from the first side of the heat exchanger is connected in a position before the other end of the injection circuit connects to the circulation circuit. The heat exchanger's second side, which shall exchange energy with the first side, is in turn connected to the injection circuit with its input after the injection valve and its output to the compressor suction side, whereby the heat exchanger exchanges energy between the high pressure side and low pressure side in the circulation circuit. The phase transformation occurs when heat exchange occurs between the refrigerant low and high pressure side in the heat exchanger. This makes it easier to control the injection of gaseous refrigerant to the suction side of the compressor, for lowering of discharge super heat.

From the third aspect the object is achieved to solve the above mentioned problems by use of an air handling unit according to claim 8. The combination of the air handling unit and the heat pump enables heating with the heat pump at outdoor temperatures down to -30°C without need of any additional heater in the system, which is very advantageous at use of the system in cold climates.

Through the invention is achieved a number of advantages compared to prior art:
- The combination of the air handling unit with heat pump provided with the injector circuit means that there is no need for an extra heater in the supply air or to provide an extended heat pump operation by an additional heater in the exhaust air.
- Extended operating time of the heat pump down to very low temperatures.
- A standard compressor can be used for a particular embodiment.
- Heat exchange between low and high pressure side (via injection circuit) makes it possible to phase transfer liquid refrigerant in the injector circuit into gaseous refrigerant, which is beneficial for the compressor when the compressor operates outside normal working area.

### Brief description of the drawings

Following schematic principle figures shows:
- Fig.1a shows a schematic sketch of an air treatment device according to an exemplary embodiment, with the injection circuit connected on a suction pipe before the compressor.
- Fig. 1b shows a schematic sketch of an air treatment device according to an exemplary embodiment, with the injection circuit connected directly to the suction chamber of the compressor.
- Fig.2 shows a schematic sketch of an air treatment device according to the invention with a heat exchanger as a part of the circulation circuit.
- Fig.3 shows a typical example of an operating condition of an air treatment device existing on the market, and the compressor working area for that operating condition.
- Fig.4 shows an example of an operating condition of an air treatment device according to the invention, where the compressor working area is extended because of the invention.

The structural design of the present invention are apparent in the following detailed description of a number of embodiments of the invention with reference to the accompanying figures which show preferred but not limiting embodiments of the invention.

### Detailed description of the drawings

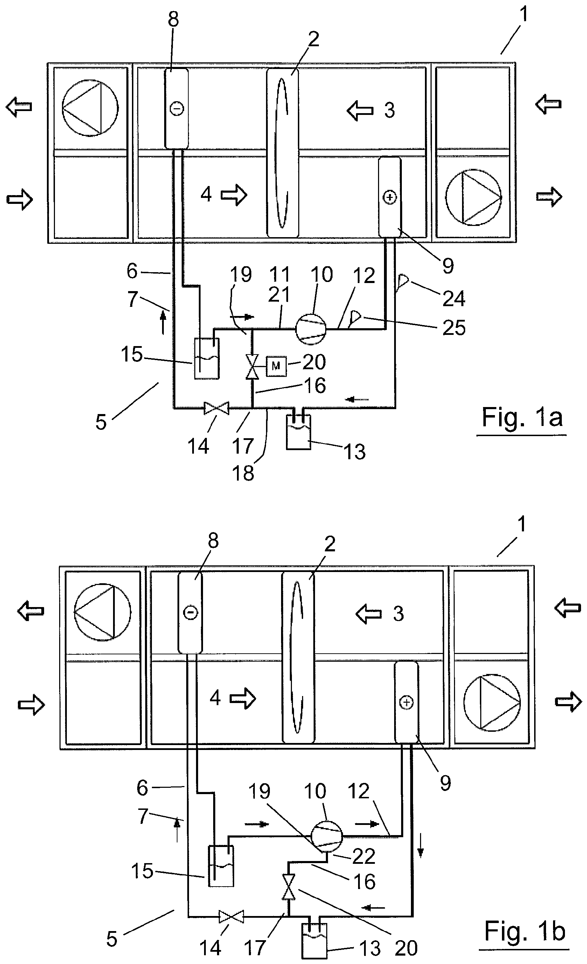

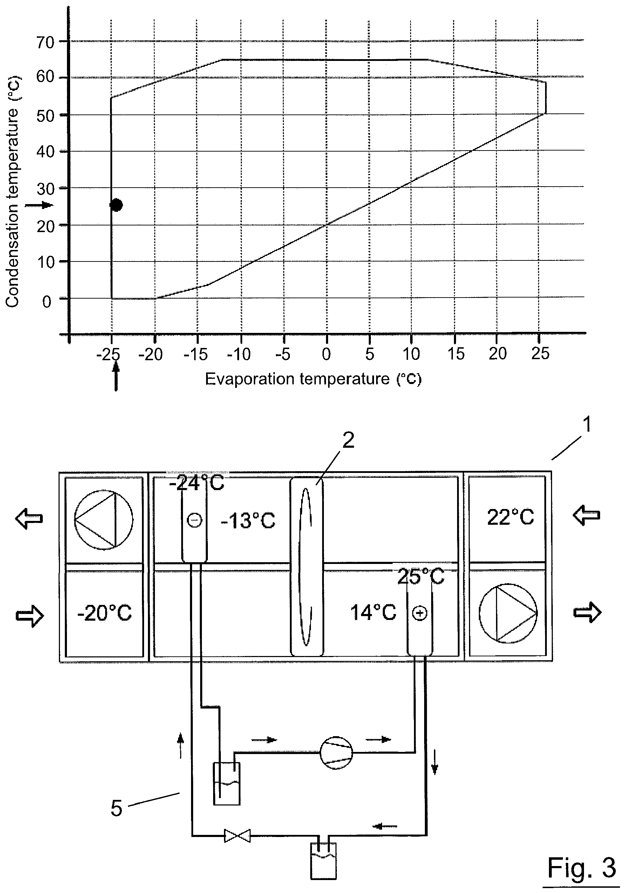

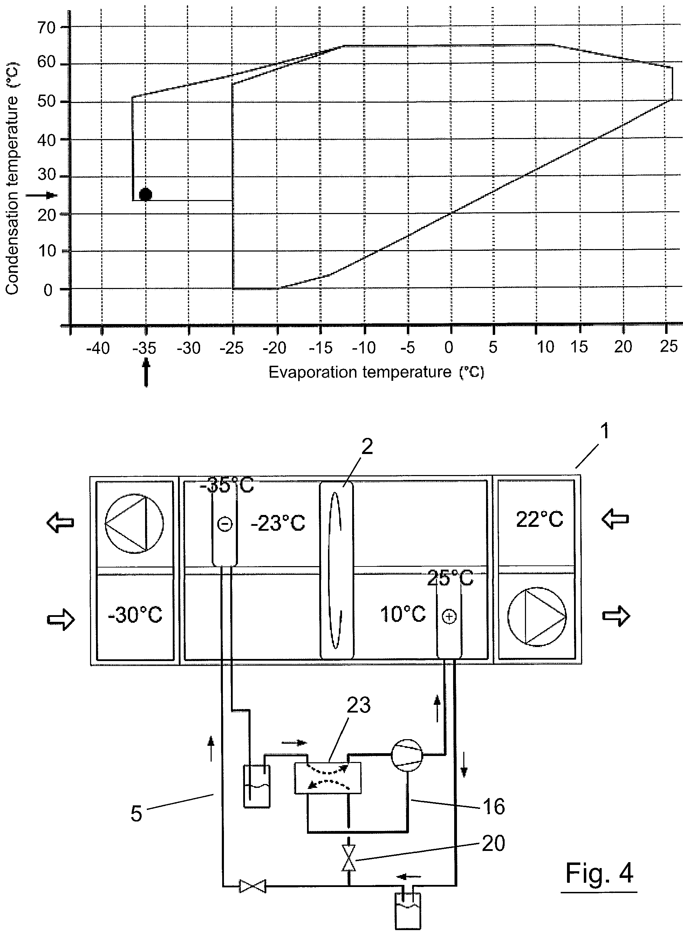

**Fig.1a** shows a schematic sketch of an air treatment device comprising an air handling unit 1 according to an exemplary embodiment. The air handling unit 1 comprises a heat exchanger 2, in this case a rotary heat exchanger, which is arranged to exchange energy between a first air stream 3 (exhaust side) and a second air stream 4 (supply air side). Further, the air handling unit 1 comprises a heat pump 5 with a circulation circuit 6 containing refrigerant 7. The figure shows the heat pump 5 in the heating case with the flow direction according to the arrows in the figure. The circulation circuit 6 comprises a number of components all connected by refrigerant pipes and in order according to the flow direction of the heating case with starting at the compressor 10, which raises the pressure in the system, followed by a pressure side 12, a temperature sensor 25 disposed on the pressure side 12, further a condenser 9 arranged in the second air stream 4 and which leaves the heat energy in exchange with the second air stream 4. Thereafter, the refrigerant 7 flows further and passes a pressure sensor 24, which is arranged on refrigerant pipe after the condenser 9, and further to a first reservoir 13, which is used to balance the refrigerant quantity 7 of the system. After the reservoir 13 the liquid refrigerant 7 is directed through a liquid pipe 18 to an expansion valve 14, which reduces the pressure of the refrigerant which then flows further to an evaporator 8, arranged in the first air stream 3 and which absorbs heat energy from the first air stream 3. After the evaporator 8 follows a second reservoir 15, which acts as a liquid separator to the extent possible, ensure that only gaseous refrigerant 7 reaches the compressor 10, which follows after the second reservoir 15 and thus the circulation circuit 6 is closed. The second reservoir 15 and the compressor 10 are interconnected by a refrigerator pipe, here called suction conduit 21. Between the liquid pipe 18 and suction conduit 21 extends an injection circuit 16, in a flow-direction order having a first end 17 connected to the liquid pipe 18, followed by an injection valve 20, and ends with a second end 19, connected to the suction conduit 21. The injection valve 20 can be of different type, such as an electric valve (solenoid valve or similar), a step motor valve or a thermal valve. The variant with thermal valve is not shown in the figure. According to earlier description, the discharge super heat that occurs when the compressor is operating in the outskirts of its working area (se fig.3 and 4), is controlled by that the pressure sensor 24 registers the pressure after the condenser 9, and transforms this to a condensation temperature T1. With the temperature sensor 25 is the hot gas temperature T2 measured, and the discharge super heat (DSH) is calculated. On the basis of this the injection valve 20 opens at need, wherein a subset of the refrigerant 7 can start to flow directly from the high pressure side (before the expansion valve 14) to the low pressure side. Depending on the operating mode the refrigerant through the injection circuit 16 may be in gaseous or liquid form, it will vary with the particular case. While the injection circuit usually consists of a very thin tube, and a relatively small valve, will in the case of liquid arriving to the suction side, substantially liquid droplets be mixed with the gaseous refrigerant 7 from the second reservoir 15. Hereby is the discharge super heat lowered and compressor 10 can run down to lower temperatures, see also Figure 4.

**Fig.1b** shows another exemplary embodiment with the only difference that the second end 19 of the injection circuit 16 directly connects to a connection on the compressor 10, which connection has direct access to the suction chamber 22 (not visible) of the compressor 10. The function is the same as above, but the compressor 10 is in this case adopted for additional refrigerant injection.

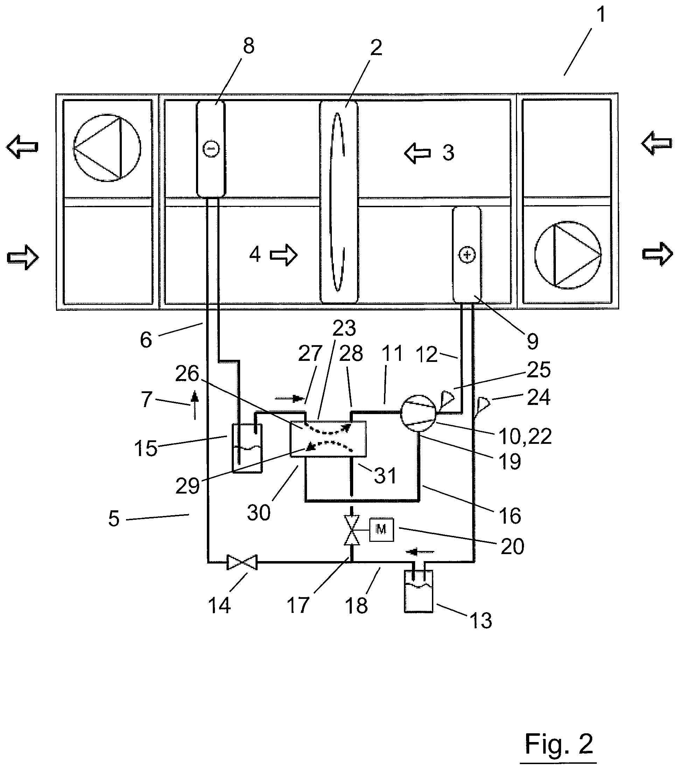

**Fig.2** shows an embodiment according to the invention which is broadly similar to the previous variants, but with the difference that a heat exchanger 23 is provided with a first side 26 connected to the circulation circuit 6 and a second side 29 connected to the injection circuit 16, with a purpose of, in appropriate cases, phase change the liquid refrigerant 7 in the injection circuit 16, to gaseous refrigerant 7, before it arrives at the suction side 11 of the compressor 10. The first side 26 of the heat exchanger 23, is connected with a first input 27 connected towards the second reservoir 15, and with a first output 28 connected to the circulation circuit 6 in a position before the connection of the injection circuit's 16 second end 19 to the suction side 11. The second side 29 of the heat exchanger 23, is in turn connected to the injection circuit 16 with a second input 30 towards the injection valve 20, and a second output 31 towards the suction side 11 of the compressor 10, wherein the subset of the refrigerant 7 flows via the injection valve 20, through the second side 29 of the heat exchanger 23, and further to the suction side of the compressor 10. Hereby, the heat exchanger 23 is arranged to exchange energy between the high pressure side and low pressure side of the circulation circuit 6, for evaporation of the liquid refrigerant 7 in the injection circuit 16. Otherwise, the function is the same as in the above described embodiments.

**Fig.3** shows an example of an operation condition at one, on the market existing, air handling unit 1 provided with a heat exchanger 2 and a conventional heat pump 5, which lacks the injection circuit according to the invention. The figure shows a diagram over the compressor working area (envelop) and the actual operating point at the operation condition, according to the temperatures in connection to the air handling unit 1. According to the example the temperatures are the following: outdoor temperature -20°C, exhaust temperature 25°C, temperature after the heat exchanger -13°C at the exhaust side and 14°C at the supply air side. In the diagram the x-axis shows evaporation temperature, which in the example is -24°C and the y-axis shows condensation temperature which in the example is 25°C, to keep a sufficient supply air temperature. As seen in the diagram, the compressor is working in the outskirts of its envelop which means that the discharge super heat rises and that the compressor thereby must operate at higher temperature than appropriate, at least for longer operation cycles, and with higher wear as result. The discharge super heat should be lowered alternatively the compressor operation time should be lowered or the compressor switched off, whereby other energy sources must be used to keep the correct supply air temperature.

**Fig.4** shows an operating condition according to an example of an air treatment device according to the invention, comprising the air handling unit 1, with the heat exchanger 2 and the heat pump 5 comprising the injection circuit 16. This example shows the embodiment where the heat exchanger 23 is part of the circulation circuit 6 and the injection circuit 16. The example shows that the air treatment device can be run down to an outdoor temperature of -30°C instead of down to -20°C, compared with the previous example (Figure 3), which means a big difference for both installation cost and running cost. This becomes possible by, with the same compressor performance as in the example in Figure 3, using the injection circuit 16 to lower the discharge super heat, which normally rises in the outskirts of the normal envelop. By directing at least a subset of refrigerant through the injection circuit 16, by controlling the injection valve 20, and inject refrigerant in connection to the suction side of the compressor 10, the discharge super heat is lowered and the compressor envelop (working area) increases, whereby an operating point corresponding to a evaporation temperature of -35°C and a condensation temperature of 25°C is possible. As seen in the chart the operating range is considerably extended, whereby other operating points becomes available.

### PARTS LIST

- 1=: air handling unit
- 2=: heat exchanger
- 3=: first air stream
- 4=: second air stream
- 5=: heat pump
- 6=: circulation circuit
- 7=: refrigerant
- 8=: evaporator
- 9=: condenser
- 10=: compressor
- 11=: suction side
- 12=: pressure side
- 13=: first reservoir
- 14=: expansion valve
- 15=: second reservoir
- 16=: injection circuit
- 17=: first end
- 18=: liquid pipe
- 19=: second end
- 20=: injection valve
- 21=: suction conduit
- 22=: suction chamber
- 23=: heat exchanger
- 24=: pressure sensor
- 25=: temperature sensor
- 26=: first side (heat exchanger)
- 27=: first input
- 28=: first output
- 29=: second side (heat exchanger)
- 30=: second input
- 31=: second output

## Claims

1. Air treatment device for heating of air, comprising an air handling unit (1), which air handling unit (1) comprises a heat exchanger (2), arranged to, in a heating mode, recover heat energy from a first air stream (3) and transfer it to a second air stream (4), for heating of the second air stream (4), and that the air treatment device further comprises a heat pump (5), arranged to, in a heating mode, recover heat energy from the first air stream (3) and transfer it to a second air stream (4), for heating of the second air stream (4), and which heat pump (5) comprises a circulation circuit (6) for refrigerant (7), an evaporator (8) arranged in the first air stream (3), in the airflow direction after the heat exchanger (2), and a condenser (9) arranged in the second air stream (4), in the airflow direction after the heat exchanger (2), and that the heat pump (5) further comprises a compressor (10) with a suction side (11) and a pressure side (12) connected to the circulation circuit (6) and arranged, in the flow direction of the refrigerant (7) in the heating mode, after the evaporator (8) and before the condenser (9), and further the circulation circuit (6) comprises an expansion valve (14) and a first reservoir (13), which are arranged, in the flow direction of the refrigerant (7) in the heating mode, after the condenser (9) and before the evaporator (8) on a liquid pipe (18), and a second reservoir (15) arranged between the evaporator (8) and the compressor (10), **characterised in that** the circulation circuit (6) further comprises an injection circuit (16) having a first end (17) connected between the condenser (9) and the expansion valve (14) at the liquid pipe (18), and a second end (19) arranged at the suction side (11) of the compressor (10), and which injection circuit (16) comprises an injection valve (20) arranged to direct at least a subset of the refrigerant (7) from the high pressure side to the low pressure side, such that the subset of the refrigerant (7) thus not pass through the expansion valve (14) and the evaporator (8), for the reduction of the heat pump (5) discharge super heat, and that the circulation circuit (6) comprises a pressure sensor (24) arranged to measure a pressure (P) on the high pressure side of the circulation circuit (6) and a temperature sensor (25) arranged to measure a hot gas temperature (T2) on the high pressure side after the compressor (10), the air treatment device comprises means for calculating a condensation temperature (T1) based on the measured pressure (P), and further means for calculating a so-called discharge super heat (DSH), which is the difference between the condensation temperature (T1) and the hot gas temperature (T2), and the injection valve (20) is arranged to control the amount of refrigerant (7) through the injection circuit (16) based on the value of the discharge super heat (DSH), to control the same, wherein a heat exchanger (23) is arranged with a first side (26) connected to the circulation circuit (6), with a first input (27) from the second reservoir (15) and with a first output (28) connected to the circulation circuit (6) before the connection of the second end (19) of the injection circuit (16), and the heat exchanger (23) is further provided with a second side (29) connected to the injection circuit (16) with a second input (30) from the injection valve (20) and a second output (31) to the compressor suction side (11), wherein the heat exchanger (23) is arranged to exchange energy between the high pressure side and low pressure side of the circulation circuit (6), for evaporation of liquid refrigerant (7) in the injection circuit (16).

2. Air treatment device according to claim 1, **characterized by** that the second end (19) of the injection circuit (16) connects to a suction conduit (21) at the suction side (11) of the compressor (10).

3. Air treatment device according to claim 1, **characterized by** that the second end (19) of the injection circuit (16) connects directly to a suction chamber (22) of the compressor (10).

4. Air treatment device according to any of the preceding claims, **characterized by** that the injection valve (20) is of electrical type.

5. Air treatment device according to any the claims 1-3, **characterized by** that the injection valve (20) is of thermal type.

6. Air treatment device according to any of the claims 1-3, **characterized by** that the injection valve (20) is of step motor type.

7. Method for heating of air at an air treatment device comprising an air handling unit (1), which air handling unit (1) comprises a heat exchanger (2), which in a heating mode recovers heat energy from a first air stream (3) and transfers it to a second air stream (4), for heating of the second air stream (4), and that the air treatment device further comprises a heat pump (5), which in a heating mode recovers heat energy from the first air stream (3) and transfers it to a second air stream (4), for heating of the second air stream (4), and which heat pump (5) comprises a circulation circuit (6) for refrigerant (7), an evaporator (8) arranged in the first air stream (3), in the airflow direction after the heat exchanger (2), and a condenser (9) arranged in the second air stream (4), in the airflow direction after the heat exchanger (2), and that the heat pump (5) further comprises a compressor (10) with a suction side (11) and a pressure side (12) connected to the circulation circuit (6) and arranged, in the flow direction of the refrigerant (7) in the heating mode, after the evaporator (8) and before the condenser (9), and further the circulation circuit (6) comprises an expansion valve (14) and a first reservoir (13), which are arranged, in the flow direction of the refrigerant (7) in the heating mode, after the condenser (9) and before the evaporator (8), and a second reservoir (15) arranged between the evaporator (8) and the compressor (10), **characterised in that** the discharge super heat (DSH) of the compressor is reduced by that at least a subset of the refrigerant (7) is injected in connection to the suction side (11) of the compressor (10), by that the circulation circuit (6) comprises an injection circuit (16) having a first end (17) connected between the condenser (9) and the expansion valve (14) at a liquid pipe (18), and a second end (19) arranged at the suction side (11) of the compressor (10), and the injection circuit (16) comprises an injection valve (20), and the injection valve (20) directs at least a subset of the refrigerant (7) from the high pressure side to the low pressure side, such that the subset of the refrigerant (7) thus not pass through the expansion valve (14) and the evaporator (8), comprising the steps to:
- with a pressure sensor (24) measure a pressure (P) on the high pressure side of the circulation circuit (6), preferably after the condenser (9),
- based on the measured pressure (P) calculate a condensation temperature (T1),
- measure a hot gas temperature (T2) on the high pressure side after the compressor (10),
- calculate a discharge super heat (DSH), which is the difference between the condensation temperature (T1) and the hot gas temperature (T2),
- control the amount of refrigerant (7) through the injection circuit (16) based on the value of the discharge super heat (DSH), to control the same, and
wherein the subset of refrigerant (7) through the injection circuit (16) is lead through a heat exchanger (23) which is arranged with a first side (26) connected to the circulation circuit (6), with a first input (27) from the second reservoir (15) and with a first output (28) connected to the circulation circuit (6) before the connection of the second end (19) of the injection circuit (16), and the heat exchanger (23) is further provided with a second side (29) connected to the injection circuit (16) with a second input (30) from the injection valve (20) and a second output (31) to the compressor suction side (11), wherein the heat exchanger (23) is arranged to exchange energy between the high pressure side and low pressure side of the circulation circuit (6), for evaporation of liquid refrigerant (7) in the injection circuit (16)

8. Use of an air handling unit (1) together with a heat pump (5) according to any of the claims 1-6 in connection with heating of supply air for serving a premises.

## Patentansprüche

1. Luftbehandlungsvorrichtung zum Erwärmen von Luft, mit einer Lufthandhabungseinheit (1), welche Lufthandhabungseinheit (1) einen Wärmeaustauscher (2) aufweist, der dazu angeordnet ist, in einem Heizmodus Wärmeenergie von einem ersten Luftstrom (3) rückzugewinnen und diese auf einen zweiten Luftstrom (4) zum Erwärmen des zweiten Luftstroms (4) zu übertragen, und wobei die Luftbehandlungsvorrichtung weiterhin eine Wärmepumpe (5) aufweist, die dazu angeordnet ist, in einem Heizmodus Wärmeenergie von dem ersten Luftstrom (3) rückzugewinnen und diese auf einen zweiten Luftstrom (4) zum Erwärmen des zweiten Luftstroms (4) zu übertragen, und welche Wärmepumpe (5) einen Zirkulationskreis (6) für ein Kältemittel (7), einen Verdampfer (8), der in dem ersten Luftstrom (3) in der Luftströmungsrichtung nach dem Wärmeaustauscher (2) angeordnet ist, und einen Kondensierer (9) aufweist, der in dem zweiten Luftstrom (4) in der Luftströmungsrichtung nach dem Wärmeaustauscher (2) angeordnet ist, und wobei die Wärmepumpe (5) weiterhin einen Kompressor (10) mit einer Saugseite (11) und einer Druckseite (12) aufweist, der mit dem Zirkulationskreis (6) verbunden und in der Strömungsrichtung des Kältemittels (7) in dem Heizmodus nach dem Verdampfer (8) und vor dem Kondensierer (9) angeordnet ist, und wobei der Zirkulationskreis (6) weiterhin ein Ausdehnungsventil (14) und ein erstes Reservoir (13), die in der Strömungsrichtung des Kältemittels (7) in dem Heizmodus nach dem Kondensierer (9) und vor dem Verdampfer (8) an einer Flüssigkeitsleitung (18) angeordnet sind, und ein zweites Reservoir (15) aufweist, das zwischen dem Verdampfer (8) und dem Kompressor (10) angeordnet ist, **dadurch gekennzeichnet, dass** der Zirkulationskreis (6) weiterhin einen Injektionskreis (16) aufweist, von dem ein erstes Ende (17) zwischen dem Kondensierer (9) und dem Ausdehnungsventil (14) mit der Flüssigkeitsleitung (18) verbunden ist, und von dem ein zweites Ende (19) an der Saugseite (11) des Kompressors (10) angeordnet ist, und welcher Injektionskreis (16) ein Injektionsventil (20) aufweist, das dazu angeordnet ist, zumindest eine Teilmenge des Kältemittels (7) von der Hochdruckseite zu der Niederdruckseite zu richten, derart, dass die Teilmenge des Kältemittels (7) somit nicht durch das Ausdehnungsventil (14) und den Verdampfer (8) für die Reduzierung der Wärmepumpe (5)-Überhitzungsentladung hindurchgeht, und dass der Zirkulationskreis (6) einen Drucksensor (24), der dazu angeordnet ist, einen Druck (P) auf der Hochdruckseite des Zirkulationskreises (6) zu messen, und einen Temperatursensor (25) aufweist, der dazu angeordnet ist, eine Heißgastemperatur (P2) auf der Hochdruckseite nach dem Kompressor (10) zu messen, wobei die Luftbehandlungsvorrichtung Mittel zum Berechnen einer Kondensationstemperatur (T1) basierend auf dem gemessenen Druck (P) und weiterhin Mittel zum Berechnen einer sog. Überhitzungsentladung (DSH) aufweist, die die Differenz zwischen der Kondensationstemperatur (T1) und der Heißgastemperatur (T2) ist, und wobei das Injektionsventil (20) dazu angeordnet ist, die Menge an Kältemittel (7) durch den Injektionskreis (16) zu steuern, basierend auf dem Wert der Überhitzungsentladung (DSH), um selbige zu steuern, wobei ein Wärmeaustauscher (23) angeordnet ist, der mit einer ersten Seite (26) mit dem Zirkulationskreis (6) mit einem ersten Eingang (27) von dem zweiten Reservoir (15) und mit einem ersten Ausgang (28) mit dem Zirkulationskreis (6) vor der Verbindung des zweiten Endes (19) des Injektionskreises (16) verbunden ist, und wobei der Wärmeaustauscher (23) weiterhin mit einer zweiten Seite (29) bereitgestellt ist, die mit dem Injektionskreis (16) mit einem zweiten Eingang (30) von dem Injektionsventil (20) und einen zweiten Ausgang (31) zu der Kompressor-Saugseite (11) verbunden ist, wobei der Wärmeaustauscher (23) dazu angeordnet ist, Energie zwischen der Hochdruckseite und der Niederdruckseite des Zirkulationskreises (6) auszutauschen, um flüssiges Kältemittel (7) in dem Injektionskreis (16) zu verdampfen.

2. Luftbehandlungsvorrichtung nach Anspruch 1, **dadurch gekennzeichnet, dass** das zweite Ende (19) des Injektionskreises (16) mit einer Saugleitung (21) an der Saugseite (11) des Kompressors (10) verbunden ist.

3. Luftbehandlungsvorrichtung nach Anspruch 1, **dadurch gekennzeichnet, dass** das zweite Ende (19) des Injektionskreises (16) unmittelbar mit einer Saugkammer (22) des Kompressors (10) verbunden ist.

4. Luftbehandlungsvorrichtung nach irgendeinem der vorhergehenden Ansprüche, **dadurch gekennzeichnet, dass** das Injektionsventil (20) von elektrischer Art ist.

5. Luftbehandlungsvorrichtung nach irgendeinem der Ansprüche 1-3, **dadurch gekennzeichnet, dass** das Injektionsventil (20) von thermischer Art ist.

6. Luftbehandlungsvorrichtung nach irgendeinem der Ansprüche 1-3, **dadurch gekennzeichnet, dass** das Injektionsventil (20) von der Art eines Schrittmotors ist.

7. Verfahren zum Erwärmen von Luft an einer Luftbehandlungsvorrichtung, die eine Lufthandhabungseinheit (1) aufweist, welche Lufthandhabungseinheit (1) einen Wärmeaustauscher (2) aufweist, der in einem Heizmodus Wärmeenergie von einem ersten Luftstrom (3) rückgewinnt und diese auf einen zweiten Luftstrom (4) zum Erwärmen des zweiten Luftstroms (4) überträgt, und wobei die Luftbehandlungsvorrichtung weiterhin eine Wärmepumpe (5) aufweist, die in einem Heizmodus Wärmeenergie von dem ersten Luftstrom (3) rückgewinnt und diese auf einen zweiten Luftstrom (4) zum Erwärmen des zweiten Luftstroms (4) überträgt, und welche Wärmepumpe (5) einen Zirkulationskreis (6) für ein Kältemittel (7), einen Verdampfer (8), der in der Luftströmungsrichtung nach dem Wärmeaustauscher (2) angeordnet ist, und einen Kondensierer (9) aufweist, der in dem zweiten Luftstrom (4) in der Luftströmungsrichtung nach dem Wärmeaustauscher (2) angeordnet ist, und wobei die Wärmepumpe (5) weiterhin einen Kompressor (10) mit einer Saugseite (11) und einer Druckseite (12) aufweist, der mit dem Zirkulationskreis (6) verbunden und in der Strömungsrichtung des Kältemittels (7) in dem Heizmodus nach dem Verdampfer (8) und vor dem Kondensierer (9) angeordnet ist, und wobei der Zirkulationskreis (6) weiterhin ein Ausdehnungsventil (14) und ein erstes Reservoir (13), die in der Strömungsrichtung des Kältemittels in dem Heizmodus nach dem Kondensierer (9) und vor dem Verdampfer (8) angeordnet sind, und ein zweites Reservoir (15) aufweist, das zwischen dem Verdampfer (8) und dem Kompressor (10) angeordnet ist, **dadurch gekennzeichnet, dass** die Überhitzungsentladung (DSH) des Kompressors reduziert ist, indem zumindest eine Teilmenge des Kältemittels (7) in Verbindung zu der Saugseite (11) des Kompressors (10) injiziert wird, indem der Zirkulationskreis (6) einen Injektionskreis (16) aufweist, dessen erstes Ende (17) zwischen dem Kondensierer (9) und dem Ausdehnungsventil (14) mit einer Flüssigkeitsleitung (18) verbunden ist, und dessen zweites Ende (19) an der Saugseite (11) des Kompressors (10) angeordnet ist, und der Injektionskreis (16) ein Injektionsventil (20) aufweist, und das Injektionsventil (20) zumindest eine Teilmenge des Kältemittels (7) von der Hochdruckseite zu der Niederdruckseite richtet, derart, dass die Teilmenge des Kältemittels (7) somit nicht durch das Ausdehnungsventil (14) und den Verdampfer (8) hindurchgeht, mit den Schritten:
- Messen eines Druckes (P) auf der Hochdruckseite des Zirkulationskreises (6), vorzugsweise nach dem Kondensierer (9), mittels eines Drucksensors (24),
- Berechnen, basierend auf dem gemessenen Druck (P), einer Kondensationstemperatur (T1),
- Messen einer Heißgastemperatur (T2) auf der Hochdruckseite nach dem Kompressor (10),
- Berechnen einer Überhitzungsentladung (DSH), die die Differenz zwischen der Kondensationstemperatur (T1) und der Heißgastemperatur (T2) ist,
- Steuern der Menge an Kältemittel (7) durch den Injektionskreis (16) basierend auf dem Wert der Überhitzungsentladung (DSH), um selbige zu steuern, und
wobei die Teilmenge an Kältemittel (7) durch den Injektionskreis (16) durch einen Wärmeaustauscher (23) geführt wird, der mit einer ersten Seite (26) mit dem Zirkulationskreis (6) mit einem ersten Eingang (27) von dem zweiten Reservoir (15) und mit einem mit dem Zirkulationskreis (6) vor der Verbindung des zweiten Endes (19) des Injektionskreises (16) verbundenen ersten Ausgang (28) verbunden angeordnet ist, und wobei der Wärmeaustauscher (23) weiterhin mit einer zweiten Seite (29) bereitgestellt ist, die mit dem Injektionskreis (16) mit einem zweiten Eingang (30) von dem Injektionsventil (20) und einem zweiten Ausgang (31) zu der Kompressor-Saugseite (11) verbunden bereitgestellt ist, wobei der Wärmeaustauscher (23) dazu angeordnet ist, Energie zwischen der Hochdruckseite und der Niederdruckseite des Zirkulationskreises (6) auszutauschen, um flüssiges Kältemittel (7) in dem Injektionskreis (16) zu verdampfen.

8. Verwendung einer Lufthandhabungseinheit (1) zusammen mit einer Wärmepumpe (5) gemäß irgendeinem der Ansprüche 1-6 in Verbindung mit einem Erwärmen von Zuluft zum Bedienen eines Gebäudes.

## Revendications

1. Dispositif de traitement d'air pour chauffer de l'air, comprenant une unité de traitement d'air (1), laquelle unité de traitement d'air (1) comprend un échangeur de chaleur (2), agencé pour, dans un mode de chauffage, récupérer de l'énergie thermique à partir d'un premier flux d'air (3) et la transférer à un second flux d'air (4), pour chauffer le second flux d'air (4), alors que le dispositif de traitement d'air comprend en outre une pompe à chaleur (5), agencée pour, dans un mode de chauffage, récupérer de l'énergie thermique à partir du premier flux d'air (3) et la transférer à un second flux d'air (4), pour chauffer le second flux d'air (4), laquelle pompe à chaleur (5) comprend un circuit de circulation (6) pour du réfrigérant (7), un évaporateur (8) agencé dans le premier flux d'air (3), dans la direction d'écoulement d'air, après l'échangeur de chaleur (2), et un condenseur (9) agencé dans le second flux d'air (4), dans la direction d'écoulement, après l'échangeur de chaleur (2), et que la pompe à chaleur (5) comprend en outre un compresseur (10) comportant un côté aspiration (11) et un côté refoulement (12) relié au circuit de circulation (6) et agencé, dans la direction d'écoulement du réfrigérant (7), dans le mode de chauffage, après l'évaporateur (8) et avant le condenseur (9), et en outre le circuit de circulation (6) comprend une soupape de détente (14) et un premier réservoir (13), qui sont agencés, dans la direction d'écoulement du réfrigérant (7), dans le mode de chauffage, après le condenseur (9) et avant l'évaporateur (8), sur une tuyauterie de liquide (18), et un second réservoir (15) agencé entre l'évaporateur (8) et le compresseur (10), **caractérisé en ce que** le circuit de circulation (6) comprend en outre un circuit d'injection (16) ayant une première extrémité (17) reliée entre le condenseur (9) et la soupape de détente (14) sur la tuyauterie de liquide (18), et une seconde extrémité (19) agencée sur le côté aspiration (11) du compresseur (10), et lequel circuit d'injection (16) comprend une soupape d'injection (20) agencée pour diriger au moins une partie du réfrigérant (7) du côté haute pression vers le côté basse pression, de façon telle qu'ainsi ladite partie du réfrigérant (7) ne traverse pas la soupape de détente (14) et l'évaporateur (8), pour la réduction de la surchauffe de refoulement de la pompe à chaleur (5), et que le circuit de circulation (6) comprend un capteur de pression (24) agencé pour mesurer une pression (P) sur le côté haute pression du circuit de circulation (6) et un capteur de température (25) agencé pour mesurer une température de gaz chauds (T2) sur le côté haute pression après le compresseur (10), le dispositif de traitement d'air comprend des moyens pour calculer une température de condensation (T1) basée sur la pression mesurée (P), et en outre des moyens pour calculer ce qu'il est convenu d'appeler une surchauffe de refoulement (DSH), qui est la différence entre la température de condensation (T1) et la température de gaz chauds (T2), et la soupape d'injection (20) est agencée pour régler le débit de réfrigérant (7) passant dans le circuit d'injection (16) sur la base de la valeur de la surchauffe de refoulement (DSH), afin de régler cette dernière, alors qu'un échangeur de chaleur (23) est agencé avec un premier côté (26) relié au circuit de circulation (6), avec une première entrée (27) en provenance du second réservoir (15) et avec une première sortie (28) reliée au circuit de circulation (6) avant la jonction de la seconde extrémité (19) du circuit d'injection (16), et l'échangeur de chaleur (23) est en outre pourvu d'un second côté (29) relié au circuit d'injection (16) avec une seconde entrée (30) en provenance de la soupape d'injection (20) et une seconde sortie (31) vers le côté (11) d'aspiration de compresseur, alors que l'échangeur de chaleur (23) est agencé pour échanger de l'énergie entre le côté haute pression et le côté basse pression du circuit de circulation (6), pour une évaporation du réfrigérant liquide (7) dans le circuit d'injection (16).

2. Dispositif de traitement d'air suivant la revendication 1, **caractérisé en ce que** la seconde extrémité (19) du circuit d'injection (16) est reliée à un conduit d'aspiration (21) sur le côté aspiration (11) du compresseur (10).

3. Dispositif de traitement d'air suivant la revendication 1, **caractérisé en ce que** la seconde extrémité (19) du circuit d'injection (16) est reliée directement à la chambre d'aspiration (22) du compresseur (10).

4. Dispositif de traitement d'air suivant l'une quelconque des revendications précédentes, **caractérisé en ce que** la soupape d'injection (20) est de type électrique.

5. Dispositif de traitement d'air suivant l'une quelconque des revendications 1-3, **caractérisé en ce que** la soupape d'injection (20) est de type thermique.

6. Dispositif de traitement d'air suivant l'une quelconque des revendications 1-3, **caractérisé en ce que** la soupape d'injection (20) est de type moteur pas-à-pas.

7. Procédé de chauffage d'air sur un dispositif de traitement d'air comprenant une unité de traitement d'air (1), laquelle unité de traitement d'air (1) comprend un échangeur de chaleur (2), qui, dans un mode de chauffage, récupère de l'énergie thermique à partir d'un premier flux d'air (3) et la transfère à un second flux d'air (4), pour chauffer le second flux d'air (4), alors que le dispositif de traitement d'air comprend en outre une pompe à chaleur (5), qui, dans un mode de chauffage, récupère de l'énergie thermique à partir du premier flux d'air (3) et la transfère à un second flux d'air (4), pour chauffer le second flux d'air (4), laquelle pompe à chaleur (5) comprend un circuit de circulation (6) pour un réfrigérant (7), un évaporateur (8) agencé dans le premier flux d'air (3), dans la direction d'écoulement d'air, après l'échangeur de chaleur (2), et un condenseur (9) agencé dans le second flux d'air (4), dans la direction d'écoulement d'air, après l'échangeur de chaleur (2), et le fait que la pompe à chaleur (5) comprend en outre un compresseur (10) comportant un côté aspiration (11) et un côté refoulement (12) relié au circuit de circulation (6) et agencé, dans la direction d'écoulement du réfrigérant (7), dans le mode de chauffage, après l'évaporateur (8) et avant le condenseur (9), et en outre le circuit de circulation (6) comprend une soupape de détente (14) et un premier réservoir (13), qui sont agencés, dans la direction d'écoulement du réfrigérant (7), dans le mode de chauffage, après le condenseur (9) et avant l'évaporateur (8), et un second réservoir (15) agencé entre l'évaporateur (8) et le compresseur (10), **caractérisé en ce que** la surchauffe de refoulement (DSH) du compresseur est réduite, par le fait qu'au moins une partie du réfrigérant (7) est injectée en liaison avec le côté aspiration (11) du compresseur (10), **en ce que** le circuit de circulation (6) comprend un circuit d'injection (16) ayant une première extrémité (17) reliée entre le condenseur (9) et la soupape de détente (14) sur une tuyauterie de liquide (18), et une seconde extrémité (19) agencée sur le côté aspiration (11) du compresseur (10), et le circuit d'injection (16) comprend une soupape d'injection (20), et la soupape d'injection (20) dirige au moins une partie du réfrigérant (7) du côté haute pression vers le côté basse pression, de façon telle qu'ainsi ladite partie du réfrigérant (7) ne traverse pas la soupape de détente (14) et l'évaporateur (8),
comprenant les étapes consistant :
- à l'aide d'un capteur de pression (24), à mesurer une pression (P) sur le côté haute pression du circuit de circulation (6), de préférence après le condenseur (9),
- sur la base de la pression (P) mesurée, à calculer une température de condensation (T1),
- à mesurer une température de gaz chauds (T2) sur le côté haute pression après le compresseur (10),
- à calculer une surchauffe de refoulement (DSH), qui est la différence entre la température de condensation (T1) et la température de gaz chauds (T2),
- à régler le débit de réfrigérant (7) à travers le circuit d'injection (16) sur la base de la valeur de la surchauffe de refoulement (DSH), afin de régler celle-ci, et
la partie de réfrigérant (7) passant par le circuit d'injection (16) est envoyée traverser un échangeur de chaleur (23) qui est agencé avec un premier côté (26) relié au circuit de circulation (6), avec une première entrée (27) en provenance du second réservoir (15) et avec une première sortie (28) reliée au circuit de circulation (6) avant la jonction de la seconde extrémité (19) du circuit d'injection (16), et l'échangeur de chaleur (23) est en outre pourvu d'un second côté (29) relié au circuit d'injection (16) avec une seconde entrée (30) en provenance de la soupape d'injection (20) et une seconde sortie (31) vers le côté (11) d'aspiration de compresseur, alors que l'échangeur de chaleur (23) est agencé pour échanger de l'énergie entre le côté haute pression et le côté basse pression du circuit de circulation (6), pour une évaporation du réfrigérant liquide (7) dans le circuit d'injection (16).

8. Utilisation d'une unité de traitement d'air (1) en commun avec une pompe à chaleur (5) suivant l'une quelconque des revendications 1-6 en liaison avec le chauffage d'air entrant afin de desservir un local.
